(19) Europäisches Patentamt
European Patent Office
Office européen des brevets

(11) **EP 1 326 059 A1**

(12) **EUROPÄISCHE PATENTANMELDUNG**

(43) Veröffentlichungstag:
**09.07.2003 Patentblatt 2003/28**

(51) Int Cl.7: **G01B 21/08**, G01N 25/72

(21) Anmeldenummer: **02000446.1**

(22) Anmeldetag: **08.01.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Florin, Christian**
**6373 Ennetbürgen (CH)**

(72) Erfinder: **Florin, Christian**
**6373 Ennetbürgen (CH)**

(74) Vertreter: **Hiebsch, Gerhard F., Dipl.-Ing. et al**
**Hiebsch Peege Behrmann,**
**Patentanwälte,**
**Heinrich-Weber-Platz 1**
**78224 Singen (DE)**

(54) **Verfahren und Messgerät zur Kontrolle von Eigenschaften eines Mehrlagenschichtaufbaus**

(57) Bei einem Verfahren zur Kontrolle von Eigenschaften einzelner Schichten bei einem Mehrlagenschichtaufbau durch reflektierte Infrarotstrahlung wird mit einem Energiepuls eine thermische Schockwelle in einem definierten Spektralbereich auf die Oberfläche der Schicht aufgebracht; es wird ein von der Oberfläche ausgehendes dreidimensionales, durch die Mehrlagenschicht gehendes Diagramm der spektralen Änderungen der reflektieren Strahlung aufgenommen, und die spektralen Änderungen werden zu Aussagen bezüglich Schichtdicke, Fehlern, insbesondere Bindefehlern, und Haftung od.dgl. Eigenschaften ausgewertet.

Fig.2

**Beschreibung**

Die Erfindung betrifft ein Verfahren und ein Messgerät zur Kontrolle von Eigenschaften einzelner Schichten bei einem Mehrlagenschichtaufbau durch reflektierte Infrarotstrahlung.

Vorrichtungen und Verfahren zum Messen bzw. Kontrollieren der Schichtdicke, von Werkstoffeigenschaften sowie von Fehlern in Werkstoffen oder Verbundwerkstoffen werden in der Industrie bei Serienproduktionen eingesetzt. Diese bekannten Verfahren können aber nur für bestimmte Prüfungen verwendet werden, da sie verfahrensbedingt lediglich gewisse Bereiche für diese Prüfungungen abdecken.

Ein weiterer Mangel dieser Verfahren bleibt, dass nur die Wärmeverteilung im Teil bzw. der Wärmefluss gemessen wird. Da alle diese Geräte zur Auswertung einen großen Geräteaufwand erzwingen und sehr kostenspielig sind, können diese für Anwendungen in situ -- z.B. in einer Großfeuerungsanlage -- zur Schichtdickenmessung oder zum Bestimmen der Haftung der Korrosionsschutzschicht auf dem Grundwerkstoff nicht herangezogen werden. Auch durch die Auswahl der Energiequelle -- wie etwa eines Lasers -- sind diese mit den bis jetzt lieferbaren Geräten für die Produktion und die Forschung nur in begrenzten Bereichen zu verwenden.

Eine Messung der einzelnen Schichtdicken von mehrlagigen Schichten und deren Eigenschaften kann mit allen diesen Verfahren nicht durchgeführt werden.

In Kenntnis dieser Gegebenheiten hat sich der Erfinder das Ziel gesetzt, die Dicken einzelner Schichten in einem mehrschichtigen Aubau exakt zu ermitteln, ebenfalls die Gesamtdicke. Auch sollen aus den gefundenen Daten andere Eigenschaften wie die Haftkraft zwischen den einzelnen Schichten und Fehlereinschlüsse gemessen bzw. deren Lage festgestellt werden können.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß wird mit einem Energiepuls eine thermische Schockwelle in einem definierten Spektralbereich auf die Oberfläche der Schicht aufgebracht, ein von der Oberfläche ausgehendes dreidimensionales, durch die Mehrlagenschicht gehendes Diagramm der spektralen Änderungen der reflektierenden Strahlung aufgenommen, und zudem werden die spektralen Änderungen zu Aussagen bezüglich Schichtdicke, Fehlern, insbesondere Bindefehlern, und Haftung od.dgl. Eigenschaften ausgewertet.

Dazu hat es sich als günstig erwiesen, als Energiestrahl einen Wärmeimpuls auf die Oberfläche aufzubringen und durch diesen die thermische Schockwelle in der Mehrlagenschicht auszubilden. Statt des Wärmeimpulses kann auch ein gepulster Laserstrahl oder ein Lichtimpuls eingesetzt werden, wobei sich für letzteren insbesondere eine Gasentladungslampe eignet.

Zur erfindungsgemäßen Messung soll die Aufnahme der reflektierten Strahlung mit einer Infrarotkamera durchgeführt werden, die wenigstens einen -- bevorzugt mit einem Kühlsystem verbundenen -- Sensor aufweist.

Der Erfindung liegt also die Erkenntnis zugrunde, dass es mit Hilfe von sich überlagernden, spektral definierten thermischen Schockwellen möglich ist, die Gesamtdicke und auch die Dicke der einzelnen Schichten eines mehrschichtigen Aufbaus exakt zu messen.

Ein für dieses Verfahren besonders geeignetes Messgerät zur Kontrolle von Eigenschaften einzelner Schichten bei einem Mehrlagenschichtaufbau durch reflektierte Infrarotstrahlung zeichnet sich dadurch aus, dass es eine auf C-MOS-Technik basierende und mit einem Sensor ausgerüstete Infrarotkamera enthält, wobei ein Sensor-Array -- also eine fotoempfindliche Zelle -- im Spektralbereich von 2 µm bis 15 µm, vorzugsweise 7 µm bis 14 µm, bevorzugt wird. Auch hat es sich als günstig erwiesen, die auf der C-MOS-Technik basierende Infrarotkamera für 256 x 256 Bildelemente auszulegen.

Dank der C-MOS-Technik hat jeder Bildsensor seine eigene Ansteuerung und Auslesung, so dass jeder Bildsensor punktweise angesteuert und ausgelesen werden kann.

Nach weiteren Merkmalen der Erfindung soll die Infrarotkamera mit einem Si-Array oder einem Hybrid-Array als Sensor versehen sein, gegebenenfalls mit einem Pb-Sn-Se-Array.

Vor allem die Infrarotkamera mit dem PbSnSe-Hybrid-Array ist ein System, das die höchstmögliche thermische und dynamische Auflösung erlaubt und sich sehr flexibel an verschiedene Messaufgaben anpassen läßt. Die Infrarotkamera besteht in der Grundausrüstung aus dem Hybrid-Sensor für den Spektralbereich von 6 µm bis 12 µm. Im Detektor-Chip sind die Ansteuerung der Sensorelemente, die Chopperung und die Umwandlung des gemessenen Strahlungssignals in ein elektronisches Signal enthalten. Der gesamte Detektor-Chip ist bevorzugt auf dem Finger eines Stierlingskühlers montiert. Die Optik, der Signalverstärker sowie das Digitalisierungsmodul und die elektrische Ansteuerung des Messkopfes sind weitere Bauteile des Kamerakopfes.

Die Triggerung -- von einem externen Gerät zum Sensor oder umgekehrt -- oder die Handhabung der Signale (Erfassung, Auswertung, Speicherung) erfolgt über einen Systemrechner, in welchem auch die Grundsoftware für die Kamerabedienung, die Datenerfassung und die Auswertung erfasster Signale verwaltet wird. Das System kann als "Stand allone"-Anlage oder in Verbindung mit anderen Geräten (Regelung, Netzwerke) eingesetzt werden. Erfasste Daten können im Systemrechner oder auf handelsüblichen Rechnern abgespeichert und direkt oder anschließend an die Datenerfassung verarbeitet werden.

Die Steuerung der Kamera, die Datenerfassung und -Registrierung erfolgen über den mit allen Teilen ausgerüsteten Systemrechner (Gigabooster). Alle Daten können auch auf einen Standardcomputer übertragen und dort ausgewertet werden. Eine im Rechner eingebaute Elektronik-Karte zur Kamerasteuerung ist kundenspezifisch programmierbar.

Ein Infrarotbild besteht im Normalabtastbereich (1 Hz bis 50 Hz) aus 128 x 96 Bildelementen. Die Anzahl der interessierenden Bildelemente kann über den Systemrechner ausgewählt werden, z.B. ein Infrarotbild, bestehend aus 16 x 16 erreicht eine maximale Abtastdynamik von 16.000 Hz. Alle Messwerte im veränderbar zu wählenden Temperaturbereich von 20°C bis 2.000°C werden mit einer Auflösung von 14 bit digitalisiert. Die Messbereiche können unterteilt werden.

Das Gerät verfügt erfindungsgemäß über verschiedene Schnittstellen (digital und analog) sowie über die Elektronik zur Fernübertragung der Messdaten vom Messkopf auf den Systemrechner. Zudem besteht die Möglichkeit, externe Geräte vom System her zu regeln (Energiepulsquelle oder anderes) oder die Signalerfassung durch externe Geber zu synchronisieren.

Im Rahmen der Erfindung liegt aber auch ein Messgerät, dessen Infrarotkamera auf MCT-Technik basiert sowie mit einem MCT-Array als Sensor ausgerüstet ist. Diese Infrarotkamera wird bevorzugt für 64 x 64 Bildelemente ausgelegt.

Die Sensoren der beschriebenen Kameras sind nach einem anderen Merkmal der Erfindung mit einem Kühlsystem verbunden, beispielsweise mit einem mit flüssigen Gasen gekühlten System, das bevorzugt flüssiges $CO_2$ enthält, oder das eine außerhalb des Messgerätes angeordnete Amoniakverdampfeinrichtung ist. Jedoch kann auch ein Stierlingskühler zum Einsatz gelangen, dies vor allem bei dem oben erwähnten Pb-Sn-Se-Array, Si-Array oder Hybrid-Array als Sensor.

Auch hat sich eine Abtastdynamik zwischen 1 bis 16.000 Hz als günstig erwiesen sowie ein Drehspiegelsystem zum linienförmigen Scannen des zu messenden Objektes.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

Fig. 1 bis Fig. 4:     Skizzen und Diagramme zur Darstellung von Details für die Messung von Schichteigenschaften durch Schockwellen;

Fig. 5:     die bildliche Wiedergabe von Abläufen beim Auftreffen eines Energieimpulses auf Schichten;

Fig. 6:     den schematischen Aufbau einer Infrarotkamera mit Sensor;

Fig. 7:     die Frontansicht des Sensors der Fig. 6;

Fig. 8:     ein Diagramm zur Wellenlänge von Abstrahlungen;

Fig. 9, 10:     zwei weitere Grafiken zum Messverfahren;

Fig. 11:     eine Skizze zur Ausführung eines Messgerätes;

Fig. 12:     die Darstellung von Auswertungen von Messergebnissen an einer mehrschichtigen Konstruktion.

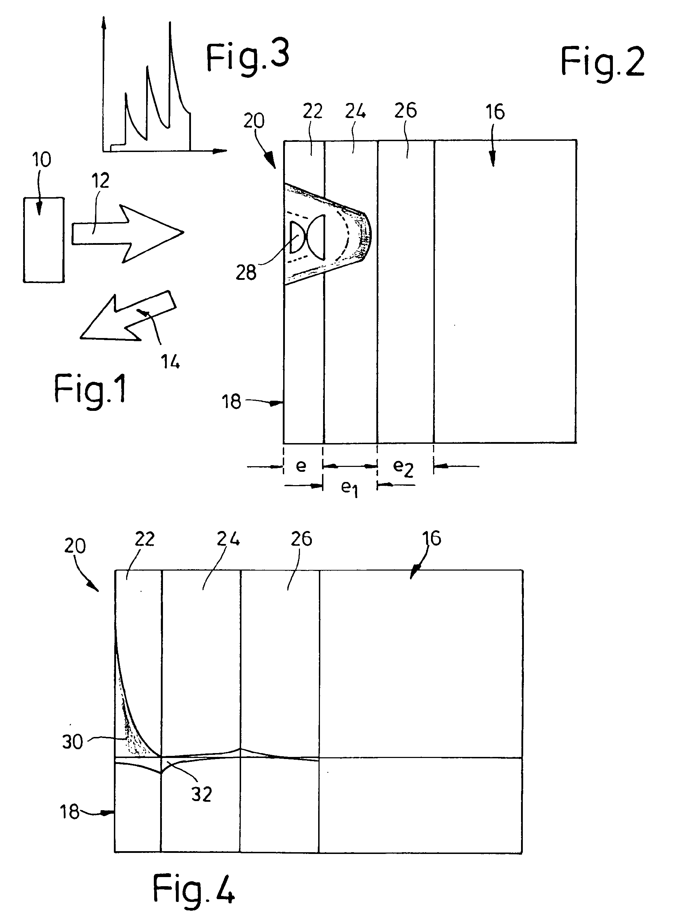

Gemäß Fig. 1 geht von einer Strahlungsquelle 10 ein Energiestrahl 12 aus; mit 14 ist eine reflektierte Strahlung als Objektstrahlung symbolisiert. Wird die thermische bzw. Energiestrahlung 12 in einem definierten Spektralbereich auf die Oberfläche 18 einer -- einem Grundwerkstoff 16 aufgelegten -- zu messenden Mehrlagenschicht 20 aufgebracht, so wird die Energiestrahlung 12 spektral reflektiert, spektral absorbiert oder spektral durchgelassen. An die Oberfläche 18 schließt eine erste oder äußere Schicht 22 an, der eine Zwischenschicht 24 sowie eine dem Grundwerkstoff 16 benachbarte Innenschicht 26 folgen. In Fig. 2 ist bei 28 ein Abschnitt mit Wärmeverlusten angedeutet.

Der reflektierte Anteil der Objektstrahlung 14 wird mit hoher Dynamik durch einen in Fig. 1, 2 nicht erkennbaren Infrarotsensor spektral selektiv gemessen; die dadurch gewonnenen Daten lassen Rückschlüsse auf den Schichtenaufbau zu. Die Skizze nach Fig. 3 bietet ein Diagramm reflektierter Strahlungsenergie zur Zeiteinheit an.

Der in der oberflächennahen äußeren Schicht 22 der Mehrlagenschicht 20 reflektierende absorbierte Anteil der aufgezwungenen thermischen Schockwelle führt in der ersten Phase zu einer partiellen Temperaturerhöhung im ersten Bereich der äußeren Schicht 22 sowie zu einem Wärmestrom innerhalb dieser. Der von der äußeren Schicht 22 durchgelassene Anteil der aufgezwungenen thermischen Schockwelle wird auf der Oberfläche der nachfolgenden Zwischenschicht 24 wieder reflektiert, absorbiert oder -- bei transparenten Schichten -- zur Innenschicht 26 durchgelassen.

Der in der Zwischenschicht 24 absorbierte Anteil der Schockwelle führt in der ersten Phase -- wie bei der äußeren Schicht 22 -- zu einer partiellen Temperatur- bzw. Strahldichteerhöhung im vorderen Bereich der Zwischenschicht 24 und im hinteren Bereich der äußeren Schicht 22, was in der Folge wieder einen Wärmestrom innerhalb der Zwischenschicht 24 gegen die Innenschicht 26 hin bedingt.

Der sich aufgrund der Transmission in der Zwischenschicht 24 bildende Wärmestrom läuft in der äußeren Schicht 22 dem Wärmestrom aus der Innenschicht 26 entgegen; die Wärmeströme überlagern sich.

Wird die zeitliche Veränderung des Temperaturfeldes auf der äußeren Oberfläche 18 mit dem erwähnten Infrarot-Sensor sehr schnell und spektral selektiv gemessen, lassen sich Rückschlüsse auf die Schichtdicke der Schichten 20 bzw. 22, 24, 26 und die Haftfestigkeit zwischen ihnen auf andere Eigenschaften herleiten.

Der Wärmestrom in der Zwischenschicht 24 läuft gegen die dritte Schicht oder Innenschicht 26 und wird zum Teil an der Trennstelle zwischen der zweiten und der dritten Schicht 24, 26 reflektiert oder in die dritte Schicht 26 weitergeleitet. Der reflektierte Anteil gelangt gegen die Trennstelle zwischen der ersten und der zweiten Schicht 22, 24 zurück, wobei ein Teil dieser Energiemenge schlussendlich wieder auf die äußere Oberfläche 18 gelangt.

Durch die sehr schnelle Messung -- bis zu 15.000 Hz -- der zeitlichen Veränderungen im Temperaturfeld auf der Oberfläche 18 mit einem Infrarot-Sensor mit definierter spektralen Empfindlichkeit lassen sich aus den gewonnenen Daten Rückschlüsse auf die Eigenschaften und die Schichtdicke $e$, $e_1$, $e_2$ der drei Schichten 22, 24, 26 ziehen.

Durch die Übertragung von thermischen Schockwellen in apperiodischer, jedoch exakt ausgelöster zeitlicher Folge ergeben sich eine Reihe von Datensätzen über das spektrale Abstrahlungsverhalten einer Oberfläche 18. Dieses Verhalten kann analytisch charakterisiert werden, woraus die Schichtdicke $e$, $e_1$, $e_2$ einer Einzelschicht 22, 24, 26 in einer mehrschichtigen Konstruktion oder die Haftkraft bzw. die Fehler innerhalb einer einzelnen der Schichten 22, 24, 26 abgeleitet werden können.

In Fig. 4 sind die vorher beschriebenen Abläufe dargestellt mit dem Wärmestrom 30 von der Oberfläche 16 der äußeren Schicht 22 nach innen sowie mit dem reflektierten Wärmestrom 32 von innen nach außen; der Energiepuls auf der Oberfläche 18 führt zu einem Wärmestrom, welcher gegen die Zwischenschicht 24 läuft. In der Trennschicht wird ein Teil des Wärmestromes reflektiert, der andere Teil in die Zwischenschicht 24 weitergeleitet. Zwischen der zweiten und der dritten Schicht 24 und 26 wiederholt sich derselbe Vorgang wieder.

Die Wärmeübergangszahl in der Grenzschicht, ohne Berücksichtigung der Haftung zwischen den zwei Schichten 22, 24 bzw. 24, 26 wird mit $\rho$ bezeichnet.

Betrachtet man die in der Trennschicht auftretende "Wärmeübergangszahl" $\rho$, so stellt man fest, dass dieser Wert durch die thermophysikalischen Stoffdaten der zwei Schichten und durch die Frequenz des Energiepulses beeinflusst wird.

$$\rho_0 := \frac{\lambda_1 \cdot \phi_1 - \lambda_2 \cdot \phi_2}{\lambda_1 \cdot \phi_1 + \lambda_2 \cdot \phi_2}$$

$$\phi := \sqrt{\frac{\omega}{2 \cdot a}}$$

Die folgende Formel beschreibt als Beispiel das zeitliche Verhalten eines Energiepulses auf der äußeren Oberfläche einer dreischichtigen Konstruktion:

$$t(\tau) := \left[ T_0 \cdot e^{-\phi_1 \cdot x} \cdot e^{j\left(\omega \cdot \tau - \phi_1 \cdot x + \varepsilon_0\right)} \right] + \rho_{12} \cdot T_0 \cdot e^{-\phi_2 \cdot x} \cdot e^{j\left(\omega \cdot \tau + \phi_2 \cdot x + \varepsilon_0\right)} + \rho_{23} \cdot T_0 \cdot e^{-\phi_3 \cdot x} \cdot e^{j\left(\omega \cdot \tau + \phi_3 \cdot x + \varepsilon_0\right)}$$

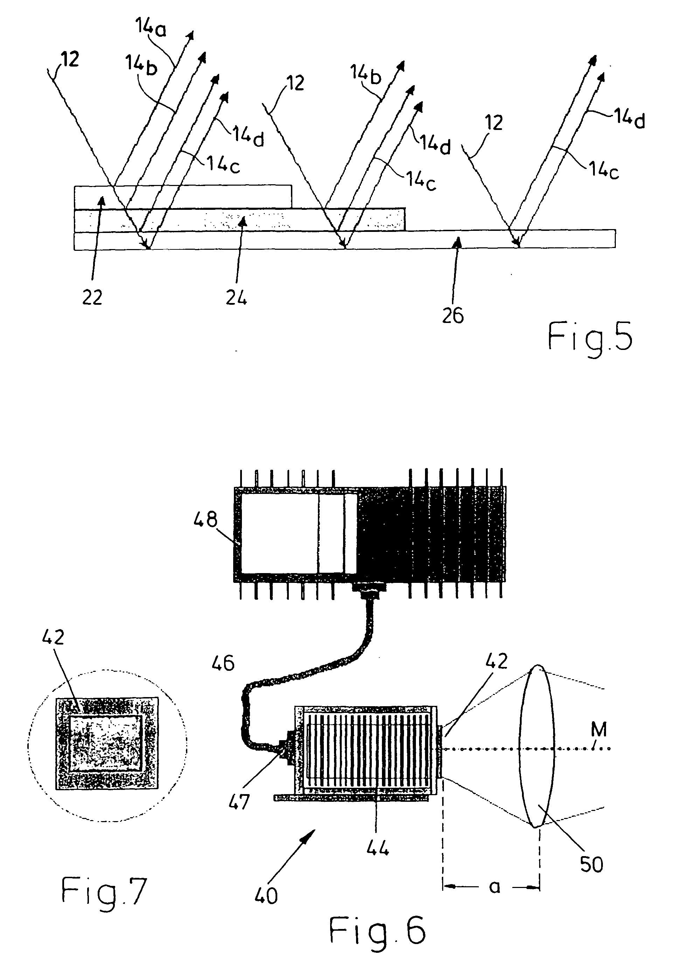

So zeigt Fig. 5 den auf die einzelnen Schichten 22, 24, 26 auftreffenden Energiepuls 12 sowie deren reflektierten Wärmestrom $14_a$ bis $14_d$.

Ein für das beschriebene Verfahren eingesetzter Messkopf bzw. eine Infrarotkamera 40 trägt gemäß Fig. 6, 7 stirnseitig einen Infrarotsensor 42, der sehr wärmeempfindlich ist und deshalb durch einen Kälteerzeuger 44 gekühlt wird; für diese Kühlung eignet sich besonders ein sog. Stierlingskühler, da er klein gehalten sowie zusammen mit der Elektronik in die Kamera bzw. das Messgerät 40 eingebaut zu werden vermag. Dargestellt ist in Fig. 6 allerdings, dass der Kälteerzeuger 44 über eine Leitung 46 an einen Kompressor 48 für das Kühlsystem angeschlossen ist; einer kameraseitigen Muffe der Leitung 46 ist eine Steuerelektronik 47 zugeordnet.

In Abstand a zum Sensor 42 befindet sich im übrigen eine zur Mittelachse M ausgerichtete Optik 50. Die Kamera bzw. das Messgerät 40 verwendet einen Sensor-Array im Spektralbereich von 2 bis 15 μm -- vorzugsweise 3 bis 14 μm -- und in besonderen Anwendungsfällen 8 bis 12 μm.

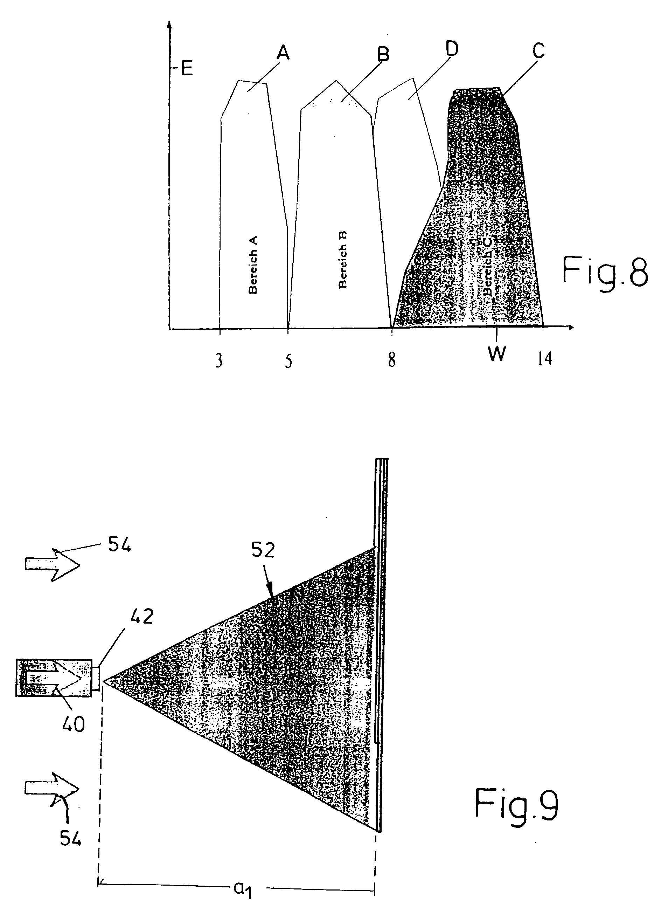

In dem Diagramm der Fig. 8 ist die Empfindlichkeit E über der Wellenlänge W angegeben. Es werden drei Bereiche A, B, C -- und damit drei Schichten -- deutlich. Mit D ist ein optionaler Bereich bezeichnet.

In Fig. 9 geht vom Sensor 42 ein sich zu einer in Abstand $a_1$ verlaufenden Oberfläche $18_a$ hin erweiternder Strahl 52 aus. Die beiden Pfeile 54 symbolisieren die Pulsenergie.

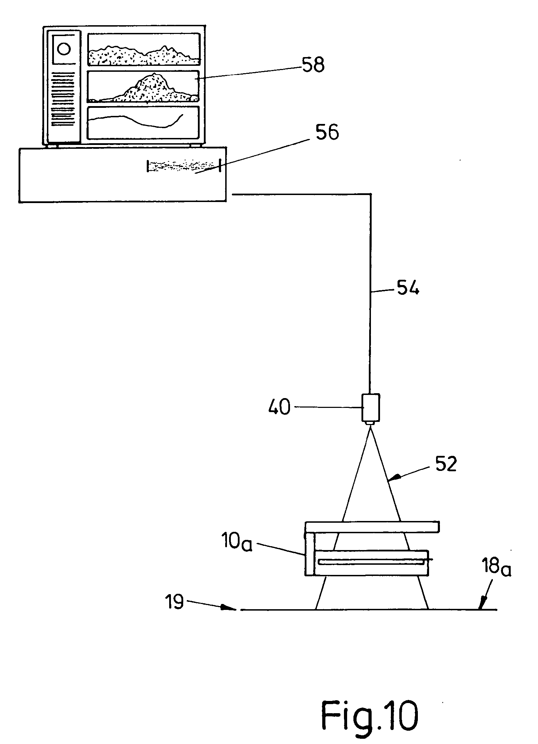

Auch die Kamera 40 der Fig. 10 ist auf ein zu messendes Objekt 19 gerichtet, beispielweise auf dessen Oberfläche $18_a$; zu dieser in Abstand ist eine Energiepulsquelle mit $10_a$ bezeichnet. Die Kamera 40 ist über eine Leitung 54 an einen Auswertungsrechner 56 mit Bildschirm 58 angeschlossen.

Der Messkopf oder die Kamera 40 arbeitet beispielsweise mit einem MCT-Array von 64 x 64 Elementen, in Verbindung mit einem opto-mechanischen Abtastsystem. Bis zu einer Abcastdynamik von 50 Hz werden 256 x 256 Bildelemente (65.536 Bildpunkte) erfasst und in Form eines Bildes dargestellt. Im Vollbildbetrieb erfolgt die Abtastung der Objektoberfläche mit einem opto-mechanischen Abtastsystem, welches die Oberfläche des Prüfungslings synchron gesteuert mit der Impulsübertragung abtastet. Die Abtastung kann flächenmäßig (x- und y-Richtung) zeilenförmig (x- oder y-Richtung) oder punktuell erfolgen.

Als Ergebnis werden die gemessenen Signale seriell registriert und zu Auswertezwecken dem Prozessor zugeführt.

Ist eine höhere Abtastrate als 50 Hz notwendig, werden nur noch die 64 x 64 Elemente des MCT-Arrays (4.096 Bildpunkte) erfasst und in Form eines Bildes dargestellt. Das Abtastsystem wird ausgeschaltet, so dass die Signale eines einzigen Messortes mit der maximalen Abtastrate von bis zu 16.000 Hz erfasst werden können.

Die aufgrund der Aufgabenstellung erforderliche Abtastgeschwindigkeit ermöglicht die Definition des wellenlängenabhängigen Signalempfängers und des Abtastsystems. Die Messeigenschaft des Strahlungsempfängers ist durch die physikalisch relevanten Materialeigenschaften des Prüflings und durch die minimal zulässige Fehlergröße sowie seiner räumlichen Lage weitgehend vorgegeben. Als Einflussgröße dient die Impulsart und die zeitliche Steuerung des Energieimpulses.

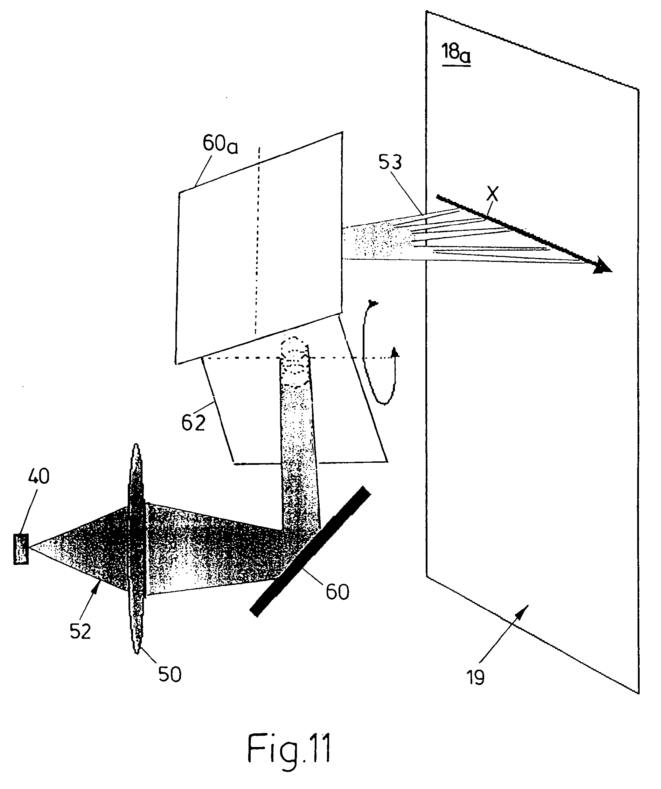

Die Fig. 11 zeigt eine Ausführung des Messgeräts bzw. der Kamera 40, die anstelle eines Zeilensensors einen Punktesensor aufweist oder ein zweidimensionales Array. Der Strahl 52 trifft nach der Optik 56 auf einen geneigt stehenden Umlenkspiegel 60 und nach diesem auf einen schwingenden Abtastspiegel 62, dem ein weiterer stehender Umlenkspiegel $60_a$ im Strahlengang nachgeordnet ist. Von diesem ausgehende Strahlenfinger 53 tasten seriell die Oberfläche $18_a$ eines Objektes 19 in Pfeilrichtung x ab.

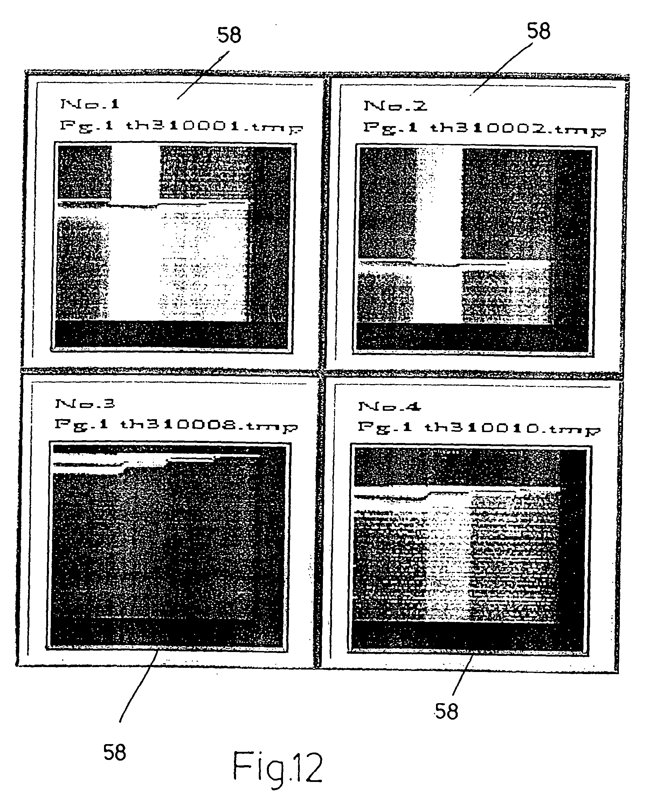

Fig. 12 bietet schließlich Ergebnisse aus der Messung an einer mehrschichtigen Konstruktion an.

BEISPIEL

An einer Mehrlagenschicht 20, die aus mehreren übereinander angeordneten dünnen Schichten besteht, soll die Schichtdicke der einzelnen Schichten gemessen werden. In Fig. 11 ist das Messsystem und der Aufbau beschrieben, in Fig. 12 sind die damit gefundenen Infrarotbilder dargestellt, die aus den aufgenommenen Daten und nach den Aufnahmen ausgewertet wurden.

Mit diesem Versuchsaufbau konnten übereinander gelagerte Dünnschichten ohne Probleme in der Produktion gemessen werden.

**Patentansprüche**

1. Verfahren zur Kontrolle von Eigenschaften einzelner Schichten bei einem Mehrlagenschichtaufbau durch reflektierte Infrarotstrahlung,
   **dadurch gekennzeichnet,**
   **dass** mit einem Energiepuls eine thermische Schockwelle in einem definierten Spektralbereich auf die Oberfläche der Schicht aufgebracht, ein von der Oberfläche ausgehendes dreidimensionales, durch die Mehrlagenschicht gehendes Diagramm der spektralen Änderungen der reflektieren Strahlung aufgenommen wird, und dass die spektralen Änderungen zu Aussagen bezüglich Schichtdicke, Fehlern, insbesondere Bindefehlern, und Haftung od. dgl. Eigenschaften ausgewertet werden.

**2.** Verfahren nach Anspruch 1, **dadurch gekennzeichnet, dass** als Energiestrahl ein Wärmeimpuls auf die Oberfläche aufgebracht und durch diesen die thermische Schockwelle in der Mehrlagenschicht ausgebildet wird.

**3.** Verfahren nach Anspruch 1, **dadurch gekennzeichnet, dass** als Energiestrahl ein gepulster Laserstrahl auf die Oberfläche aufgebracht und durch diesen die thermische Schockwelle in der Mehrlagenschicht ausgebildet wird.

**4.** Verfahren nach Anspruch 1, **dadurch gekennzeichnet, dass** als Energiestrahl ein Lichtimpuls auf die Oberfläche aufgebracht und durch diesen die thermische Schockwelle in der Mehrlagenschicht ausgebildet wird.

**5.** Verfahren nach Anspruch 1 oder 4, **dadurch gekennzeichnet, dass** als Energiestrahl ein Lichtimpuls einer Gasentladungslampe auf die Oberfläche aufgebracht und durch diesen die thermische Schockwelle in der Mehrlagenschicht ausgebildet wird.

**6.** Verfahren nach einem der Ansprüche 1 bis 5, **dadurch gekennzeichnet, dass** die Aufnahme der reflektierten Strahlung mit einer Infrarotkamera durchgeführt wird, die wenigstens einen Sensor aufweist, wobei gegebenenfalls der Sensor der Infrarotkamera gekühlt wird.

**7.** Verfahren nach einem der Ansprüche 1 bis 6, **gekennzeichnet durch** ein linienförmiges Scannen des zu messenden Objekts über ein Drehspiegelsystem.

**8.** Messgerät zur Kontrolle von Eigenschaften einzelner Schichten bei einem Mehrlagenschichtaufbau durch reflektierte Infrarotstrahlung, insbesondere zur Durchführung des Verfahrens nach wenigstens einem der voraufgehenden Ansprüche, **dadurch gekennzeichnet, dass** es eine auf C-MOS-Technik basierende und mit einem Sensor (42) ausgerüstete Infrarotkamera (40) enthält.

**9.** Messgerät nach Anspruch 8, **gekennzeichnet durch** ein Sensor-Array (42) im Spektralbereich von 2 µm bis 15 µm, vorzugsweise 6 µm bis 14 µm.

**10.** Messgerät nach Anspruch 8 oder 9, **dadurch gekennzeichnet, dass** die Infrarotkamera (40) mit einem Si-Array oder einem Hybrid-Array als Sensor (42) oder mit einem Pb-Sn-Se-Array als Sensor (42) versehen ist.

**11.** Messgerät nach einem der Ansprüche 8 bis 10, **dadurch gekennzeichnet, dass** die auf der C-MOS-Technik basierende Infrarotkamera (40) für 256 x 256 Bildelemente ausgelegt ist.

**12.** Messgerät zur Kontrolle von Eigenschaften einzelner Schichten bei einem Mehrlagenschichtaufbau durch reflektierende Infrarotstrahlung, insbesondere zur Durchführung des Verfahrens nach einem der Ansprüche 1 bis 7, **dadurch gekennzeichnet, dass** es eine auf MCT-Technik basierende sowie mit einem MCT-Array als Sensor (42) ausgerüstete Infrarotkamera (40) enthält, wobei gegebenenfalls die Infrarotkamera (40) auf MCT-Technik für 64 x 64 Bildelemente ausgelegt ist.

**13.** Messgerät nach einem der Ansprüche 8 bis 12, **dadurch gekennzeichnet, dass** der Sensor (42) mit einem Kühlsystem (44) verbunden ist.

**14.** Messgerät nach Anspruch 13, **dadurch gekennzeichnet, dass** das Kühlsystem (44) ein mit flüssigen Gasen gekühltes System, gegebenenfalls ein Kühlsystem (44) mit flüssigem $CO_2$ ist, oder dass das Kühlsystem (44) eine außerhalb des Messgerätes angeordnete Amoniakverdampfeinrichtung ist.

**15.** Messgerät nach Anspruch 13, **dadurch gekennzeichnet, dass** das Kühlsystem (44) einen Stierlingskühler enthält.

**16.** Messgerät nach Anspruch 10 oder 15, **dadurch gekennzeichnet, dass** der Pb-Sn-Se-Array, Si-Array oder Hybrid-Array als Sensor (42) der Infrarotkamera (40) mit einem Stierlingskühler verbunden ist.

**17.** Messgerät nach einem der Ansprüche 8 bis 16, **gekennzeichnet durch** eine Abtastdynamik zwischen 1 bis 16.000 Hz und/oder **durch** ein Drehspiegelsystem (60, 60$_a$, 62) zum linienförmigen Scannen des zu messenden Objektes (19) (Fig. 11).

Fig.3

Fig.2

Fig.1

Fig.4

Fig.5

Fig.7

Fig.6

Fig.8

Fig.9

Fig.10

Fig.11

Fig.12

**Europäisches Patentamt**

# EUROPÄISCHER RECHERCHENBERICHT

Nummer der Anmeldung

EP 02 00 0446

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 198 38 858 A (SALERNO ANTONIO DR ING) 22. April 1999 (1999-04-22) * Seite 3, Zeile 13-44; Abbildung 1 * | 1-17 | G01B21/08 G01N25/72 |
| X | US 5 711 603 A (ARCHACKI JR RAYMOND J ET AL) 27. Januar 1998 (1998-01-27) * Spalte 2, Zeile 61 - Spalte 3, Zeile 64; Abbildungen 1-9 * | 1-17 | |
| X | DE 197 52 574 A (TEROLAB SERVICES MANAGEMENT S ;FLORIN CHRISTIAN (CH)) 2. Juni 1999 (1999-06-02) * Seite 2, Zeile 56 - Seite 3, Zeile 21; Abbildungen 1,2 * | 1-17 | |
| X | GB 2 220 065 A (ATOMIC ENERGY AUTHORITY UK) 28. Dezember 1989 (1989-12-28) * Zusammenfassung; Abbildung 1 * | 8 | |
| A | | 1-7,9-17 | |
| A | US 5 585 624 A (ASATOURIAN ROLIN K ET AL) 17. Dezember 1996 (1996-12-17) * das ganze Dokument * | 8,10 | RECHERCHIERTE SACHGEBIETE (Int.Cl.7) G01B G01N |
| A | DD 299 405 A (UNIV BERLIN HUMBOLDT) 16. April 1992 (1992-04-16) * das ganze Dokument * | 8-17 | |

Der vorliegende Recherchenbericht wurde für alle Patentansprüche erstellt

| Recherchenort | Abschlußdatum der Recherche | Prüfer |
|---|---|---|
| MÜNCHEN | 25. März 2002 | Beyfuß, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 02 00 0446

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-03-2002

| Im Recherchenbericht angeführtes Patentdokument | | Datum der Veröffentlichung | Mitglied(er) der Patentfamilie | | Datum der Veröffentlichung |
|---|---|---|---|---|---|
| DE 19838858 | A | 22-04-1999 | IT | GE970086 A1 | 21-04-1999 |
|  |  |  | DE | 19838858 A1 | 22-04-1999 |
| US 5711603 | A | 27-01-1998 | EP | 0840110 A2 | 06-05-1998 |
|  |  |  | JP | 10142179 A | 29-05-1998 |
|  |  |  | TW | 407200 B | 01-10-2000 |
| DE 19752574 | A | 02-06-1999 | DE | 19752574 A1 | 02-06-1999 |
|  |  |  | EP | 0919802 A2 | 02-06-1999 |
| GB 2220065 | A | 28-12-1989 | KEINE | | |
| US 5585624 | A | 17-12-1996 | KEINE | | |
| DD 299405 | A | 16-04-1992 | DD | 299405 A7 | 16-04-1992 |

EPO FORM P0461

Für nähere Einzelheiten zu diesem Anhang : siehe Amtsblatt des Europäischen Patentamts, Nr.12/82